# EUROPÄISCHE PATENTSCHRIFT

(11) **EP 3 837 512 B1**
(45) Veröffentlichungstag und Bekanntmachung des Hinweises auf die Patenterteilung: **04.10.2023**
(21) Anmeldenummer: 19755309.2
(22) Anmeldetag: 08.08.2019
(51) Int. Cl.: G01H 11/08, B23K 20/10, B06B 1/06

(54) **ULTRASCHALLSCHWINGEINRICHTUNG MIT PIEZOSENSOR**
ULTRASONIC VIBRATION DEVICE HAVING PIEZO SENSOR
DISPOSITIF OSCILLANT ULTRASONORE COMPRENANT UN CAPTEUR PIÉZOÉLECTRIQUE

(30) Priorität: 17.08.2018 DE 102018120124
(43) Veröffentlichungstag der Anmeldung: 23.06.2021
(73) Patentinhaber: Herrmann Ultraschalltechnik GmbH & Co. KG, 76307 Karlsbad (DE)
(72) Erfinder: ERTZ, Gabriel, 30453 Hannover (DE); TWIEFEL, Jens, 30159 Hannover (DE); WALLASCHEK, Jörg, 30161 Hannover (DE)
(74) Vertreter: WSL Patentanwälte Partnerschaft mbB
(86) Internationale Anmeldenummer: PCT/EP2019/071297
(87) Internationale Veröffentlichungsnummer: WO 2020/035384

(56) Entgegenhaltungen:
- EP-B1- 2 288 301
- DE-A1-102004 026 826
- DE-A1-102004 045 575
- DE-B4-102004 026 826
- JP-A- 2003 126 967
- KR-A- 20160 096 935
- US-A1- 2015 002 586
- US-B1- 6 286 747

## Beschreibung

Die vorliegende Erfindung betrifft eine Ultraschallschwingeinrichtung mit einer Sonotrode und einem Konverter, wobei der Konverter einen Piezoaktor zur Umwandlung einer elektrischen Wechselspannung in eine mechanische Schwingung aufweist.

Solche Ultraschallschwingeinrichtungen sind bekannt. Eine elektrische Wechselspannung, die in der Regel von einem Generator bereitgestellt wird, wird an den Piezoaktor angelegt, der die Wechselspannung in eine mechanische Schwingung umwandelt. An dem Konverter ist die Sonotrode befestigt, wobei häufig ein Amplitudentransformator zwischengeschaltet ist. Die elektrische Wechselspannung wird so gewählt, dass sich in der gesamten Ultraschallschwingeinrichtung bestehend aus Konverter, Sonotrode und gegebenenfalls einem Amplitudentransformator eine stehende Welle ausbildet.

Häufig weist die Sonotrode eine Schweißfläche bzw. Siegelfläche auf, die mit einem zu bearbeitenden Material in Kontakt tritt. Schwingt die Ultraschallschwingeinrichtung, so wird über die Schweißfläche bzw. Siegelfläche eine hochfrequente Schwingung auf das Material übertragen.

Mit solchen Ultraschallschwingeinrichtungen können verschiedenste Materialien, insbesondere Kunststoffe und Vliesstoffe, bearbeitet werden. Meist ist der Konverter mit einer geraden Anzahl von Piezoelementen ausgestattet, die als Piezoaktoren arbeiten und mindestens ein Oberteil und ein Unterteil aufweisen, die mittels einer Doppelschraube verspannt sind. Die Piezoaktoren bestehen meist aus Keramiken und lassen sich in verschiedensten Formen im Sinterverfahren herstellen. Eine häufig verwendete Keramik ist Blei-Zirkonat-Titanat (PZT), die dielektrische, piezoelektrische, pyroelektrische und ferroelektrische Eigenschaften aufweist. Die Piezoaktoren wandeln das elektrische Hochfrequenzsignal (typischerweise 20 bis 100 kHz) in eine mechanische Deformation und erzeugen somit eine Bewegung, die sich durch die gesamte Ultraschallschwingeinheit ausbreitet.

Für die Bearbeitung ist die Schwingungsamplitude der erzeugten Bewegung maßgebend. Diese Schwingungsamplitude hat Einfluss auf die Prozessqualität, die Prozessgeschwindigkeit und die Lebensdauer des Ultraschallschwingers.

In der Praxis zeigen Piezoaktoren jedoch ein temperaturabhängiges Verhalten, d.h. sie verändern ihre Eigenschaften in Abhängigkeit von der Temperatur. Temperaturveränderungen sind jedoch nicht völlig zu vermeiden, zumal die verwendete Piezokeramik selbst keinen idealen Wandler darstellt und ein Teil der zugeführten elektrischen Energie statt in mechanische Schwingungsenergie in Wärme umgewandelt wird. Eine Veränderung der Temperatur verursacht somit eine Veränderung der für den Bearbeitungsprozess wesentlichen Schwingungsamplitude.

Um den Bearbeitungsprozess weitestgehend mit konstanter Qualität ausführen zu können, wird daher in manchen Anwendungsfällen bereits die Schwingungsamplitude gemessen und durch Anpassen der Amplitude der angelegten Wechselspannung geregelt. Dies kann beispielsweise mittels an der Außenseite der Ultraschallschwingeinheit aufgebrachten Dehnungsmessstreifen erfolgen.

Auch in der DE 10 2004 026 826 A1 wird vorgeschlagen, die Schwingungsamplitude des Ultraschallschwingsystems zu messen. Als Beispiel wird eine Messung mithilfe eines ersten Piezosensorelementes genannt. Dieses erste Piezosensorelement gibt ein erstes Messsignal aus, welches in Abhängigkeit von der Schwingungsamplitude der mechanischen Schwingung variiert. Des Weiteren offenbart EP 2 288 301 B1 die Messung des Torsionsmodus und des Längsmodus einer Sonotrode eines Ultraschallschwingsystems mit zwei Piezosensorelementen.

Im Grunde genommen ist der Piezoaktor hierbei ein aktives Element, welches eine elektrische Wechselspannung in eine mechanische Schwingung umwandelt, während das erste Piezosensorelement ein passives Element ist, welches eine Deformation des Piezosensorelementes in eine Ladungstrennung im Piezosensorelement umwandelt, die wiederum detektiert werden kann. Dabei ist die Größe der Ladungstrennung ein Maß für die Deformation des Piezosensorelementes.

Bei dieser Ausführungsform kann jedoch lediglich die Schwingungsamplitude der mechanischen Schwingungen bestimmt werden und darauf reagiert werden.

Tatsächlich sind die Änderungen der physikalischen Eigenschaften der Piezokeramik, die aufgrund einer Temperaturveränderung bewirkt werden, nicht vollständig reversibel. Eine zu starke Temperaturerhöhung der Piezokeramik kann daher zu einer teilweisen Zerstörung der Keramik führen, was durch die bekannten Schwingungsamplitudenmessungen nicht verhindert werden kann.

Des Weiteren zeigen die marktüblichen Piezokeramiken Alterungseffekte. Die Fähigkeit der Piezokeramiken ein elektrisches Hochfrequenzsignal in eine mechanische Deformation umzuwandeln nimmt im Laufe der Zeit ab. Dies kann durch das beschriebene Messverfahren in gewissen Grenzen durch erhöhen der Amplitude der Wechselspannung kompensiert werden. Allerdings ist mit fortschreitender Alterung irgendwann der Zeitpunkt erreicht, bei dem mit dem Piezoaktor die benötigte Schwingungsamplitude nicht mehr zuverlässig erzeugt werden kann.

Darüber hinaus könnte auch die Änderung anderer intensiver Zustandsgrößen eine Veränderung der von dem Piezoaktor bereitgestellten Schwingungsamplitude bewirken. Unter einer intensiven Zustandsgröße wird eine Zustandsgröße verstanden, die sich bei einer Veränderung der Größe des betrachteten Systems nicht ändert. Beispiele für intensive Zustandsgrößen sind neben der Temperatur und dem Alterungszustand beispielsweise auch der Druck.

Ausgehend von dem beschriebenen Stand der Technik ist es daher Aufgabe der vorliegenden Erfindung, eine Ultraschallschwingeinrichtung bereitzustellen, die die Messung von zumindest einer intensiven Zustandsgröße, wie z.B. der Temperatur oder des Alterungszustandes, des Piezoaktors, erlaubt.

Erfindungsgemäß wird diese Aufgabe durch ein zweites Piezosensorelement gelöst, welches ein zweites Messsignal ausgibt, welches in Abhängigkeit von der Schwingungsamplitude der mechanischen Schwingung variiert, wobei das erste und zweite Piezosensorelement sich in einer physikalischen Eigenschaft unterscheiden, sodass das erste und das zweite Messsignal eine unterschiedliche Abhängigkeit von einer intensiven Zustandsgröße zeigen.

Durch die erfindungsgemäße Ultraschallschwingeinrichtung kann somit eine Veränderung der intensiven Zustandsgröße auf einfache Art und Weise detektiert werden, da eine Veränderung der intensiven Zustandsgröße sich unterschiedlich auf das erste und das zweite Messsignal auswirkt.

Beispielsweise könnte das erste Piezosensorelement aus einem pyroelektrischen Material bestehen, während das zweite Piezosensorelement nur schwach oder gar nicht pyroelektrisch ist. Während das erste Piezosensorelement aufgrund seiner pyroelektrischen Eigenschaften eine Abhängigkeit von der Zustandsgröße Temperatur zeigt, d.h. das erste Messsignal wird von der Temperatur deutlich beeinflusst, zeigt das zweite Piezosensorelement nur eine geringe oder gar keine Temperaturabhängigkeit, sodass das zweite Messsignal nahezu unbeeinflusst von Temperaturänderungen bleibt.

In einer bevorzugten Ausführungsform der Erfindung ist eine Vergleichseinrichtung vorgesehen, welche das erste Messsignal mit dem zweiten Messsignal vergleicht. Durch den Vergleich kann nun festgestellt werden, ob eine Veränderung des Messsignals temperaturbedingt erfolgt.

Beide Messsignale zeigen in erster Linie ein Schwingungsverhalten, welches aufgrund der piezoelektrischen Eigenschaften der Piezosensorelemente durch die in der Ultraschallschwingeinrichtung ausgebildeten mechanischen Schwingungen verursacht wird. Diese wirken sich jedoch auf die beiden Piezosensorelemente in gleicher Weise aus. Weisen die beiden Piezosensorelemente bei einer gegebenen Temperatur die gleiche Verformung bei gleicher durch die Wechselspannung verursachten Polarisation auf, so kann die Differenz der beiden Messsignale gebildet werden. Bei der gegebenen Temperatur beträgt die Differenz dann idealerweise Null. Gegebenenfalls sind die Messsignale bei der Normaltemperatur so zu gewichten, dass die Differenz Null ergibt.

Kommt es während des Bearbeitungsprozesses zu einer Erwärmung der Ultraschallschwingeinrichtung und damit auch des Konverters und des zugehörigen Piezoaktors, führt dies aufgrund der unterschiedlichen Abhängigkeit der beiden Messsignale von der Temperatur zu einer Differenz von ungleich Null. Anhand der Differenz kann somit auf eine Temperaturveränderung geschlossen werden.

Übersteigt diese Differenz einen vorbestimmten Wert, können Maßnahmen ergriffen werden, um eine Beschädigung des Piezoaktors zu verhindern. Beispielsweise kann der den Konverter antreibende Generator abgeschaltet werden oder es kann eine Kühlvorrichtung zum Kühlen des Konverters aktiviert werden.

In einer weiteren bevorzugten Ausführungsform weisen das erste Piezosensorelement und das zweite Piezosensorelement Kristalle mit unterschiedlichen mittleren Kristallitgrößen auf.

Auch der Alterungszustand ist eine intensive Zustandsgröße. Insbesondere bei ferroelektrischen Materialien wirken sich Alterungsvorgänge aufgrund der komplexen Atomgitterstruktur stark aus, sodass es hier zu Depolarisierungseffekten, Alterungseffekten und Materialermüdung kommt. Nicht ferroelektrische piezoelektrische Materialien sind mit ihren relativ einfachen Atomgittern weniger anfällig für diese Alterungsvorgänge. Folglich sind Stoffe mit größeren Kristalliten oder Monokristalle weniger anfällig gegenüber Alterungsprozessen, sodass durch eine Vergleichsmessung an einem Piezosensorelement mit Alterungseffekten und einem Piezosensorelement mit keinem oder geringeren Alterungseffekten Rückschlüsse auf den Umfang der Alterung gezogen werden. Durch diese Maßnahme kann der Alterungseffekt des ersten Sensorelementes bestimmt werden. Dabei ist besonders bevorzugt eine Ausführungsform, bei der das eine Piezosensorelement ein Polykristall ist, während das andere Piezosensorelement ein Monokristall ist.

Wird das erste Piezosensorelement aus dem gleichen Material hergestellt wie der Piezoaktor ist jedoch die Alterung des ersten Piezosensorelementes ein Maß für die Alterung des Piezoaktors.

Die Piezosensorelemente werden in einer bevorzugten Ausführungsform im Konverter angeordnet. Dabei ist eine Anordnung möglichst nahe an dem Piezoaktor von Vorteil. Insbesondere dann, wenn die Temperatur des Piezoaktors erfasst werden soll, ist es von Vorteil, wenn das Piezosensorelement, dessen Messsignal die höhere Temperaturabhängigkeit zeigt, näher am Piezoaktor angeordnet ist als das andere Piezosensorelement. Weist beispielsweise das zweite Piezosensorelement einen Quarz auf, während das erste Piezosensorelement aus PZT besteht, ist es von Vorteil, wenn das erste Piezosensorelement näher am Piezoaktor angeordnet ist als das zweite Piezosensorelement.

Darüber hinaus sollten die physikalischen Eigenschaften des Piezoaktors und eines der beiden Piezosensorelemente sehr ähnlich sein. Daher ist es besonders bevorzugt, wenn das erste Piezosensorelement aus demselben Material besteht wie der Piezoaktor.

Insbesondere in Ultraschallschwingsystemen, wie sie hier betrachtet werden, wird bei den Piezoaktor häufig der Longitudinaleffekt (d33-Richtung) ausgenutzt. Von Vorteil ist es daher, wenn Piezoaktor und die Piezosensoren in Longitudinalrichtung nebeneinander angeordnet sind. Die Dicke des Piezoaktors in Longitudinalrichtung wird im Wesentlichen durch die benötigte Schwingungsamplitude der mechanischen Schwingung bestimmt. Die Dicke der Piezosensorelemente kann hingegen deutlich geringer sein. Dies reduziert die Kosten der Piezosensorelemente.

Zur Bestimmung der Veränderung einer intensiven Zustandsgröße wird somit das erste Messsignals und das zweite Messsignal erfasst. Die beiden erfassten Messsignale werden voneinander abgezogen, d. h. die Differenz gebildet. Dabei ist es unter Umständen notwendig, zumindest eines der beiden Messsignale mit einem Wichtungsfaktor zu multiplizieren, bevor die Differenz gebildet wird. Der Wichtungsfaktor kann auch 1 sein. Die derart bestimmte Differenz ist dann ein Maß für die Veränderung der intensiven Zustandsgröße.

Weitere Vorteile, Merkmale und Anwendungsmöglichkeiten der vorliegenden Erfindung werden deutlich anhand der folgenden Beschreibung einer bevorzugten Ausführungsform. Es zeigen:
- Figur 1: eine erste Ausführungsform eines Konverters einer erfindungsgemäßen Ultraschallschwingvorrichtung und
- Figur 2: eine zweite Ausführungsform eines Konverters einer erfindungsgemäßen Ultraschallschwingvorrichtung,

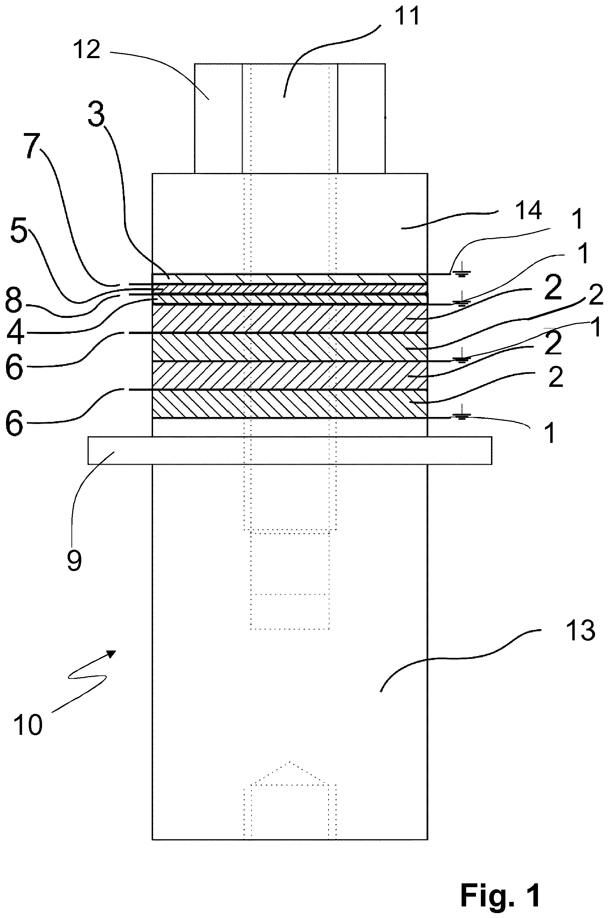

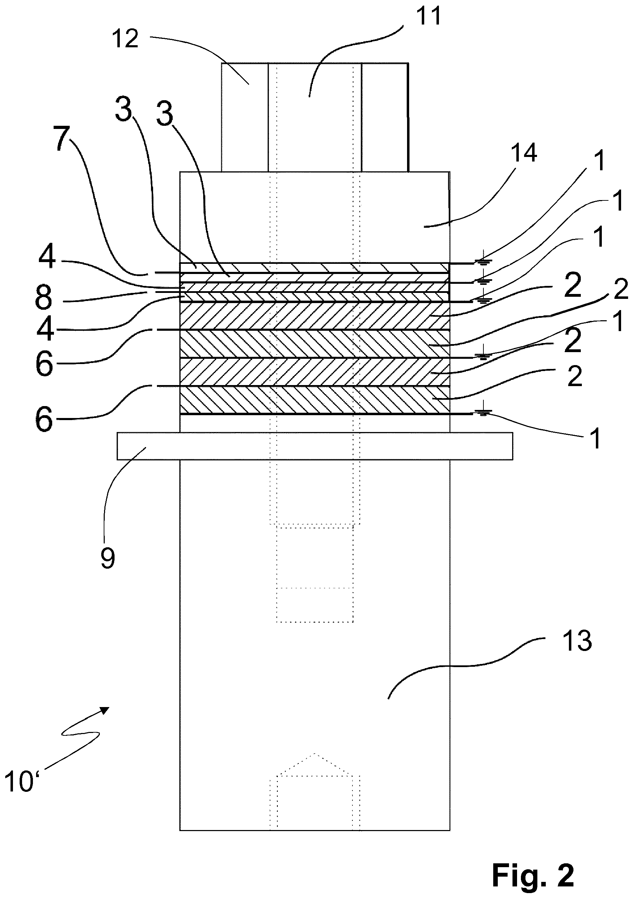

In den Figuren 1 und 2 sind zwei unterschiedliche Varianten eines Konverters 10 bzw. 10' gezeigt. Der Konverter kann, gegebenenfalls über einen Amplitudentransformator, mit einer Sonotrode verbunden werden.

Der Einfachheit halber ist hier lediglich der Konverter gezeigt. Die Ankopplung des Konverters an die Sonotrode bzw. den Amplitudentransformator ist jedoch allgemein bekannt und nicht Gegenstand der vorliegenden Erfindung.

Der Konverter 10 bzw. 10' weist Grundkörperelemente 13 und 14 auf, zwischen denen der Piezoaktor 2 sowie die Piezosensorelemente 3, 4 angeordnet sind. Die Befestigung erfolgt mithilfe der Gewindestange 11 und der Befestigungsmutter 12. Das untere Grundkörperelement 13 weist einen Halteflansch 9 auf, an welchem der Konverter gehalten werden kann.

Der Piezoaktor besteht aus zwei Paaren von Piezoscheiben 2. Jedes Paar ist an seine Außenflächen jeweils mit einer Ground-Elektrode 1 verbunden. Die zueinander zugewandten Flächen jedes Paares ist mit einer +-Elektrode 6 verbunden, über welche der Aktor angesteuert werden kann. Mithilfe des Piezoaktors 2 wird eine mechanische Schwingung im Konverter und damit auch in den angeschlossenen Elementen, nämlich der Sonotrode und gegebenenfalls dem Amplitudentransformator, erzeugt. Zu diesem Zweck ist ein Generator (nicht gezeigt) über die +-Elektroden mit dem Piezoaktor verbunden. Der Generator liefert eine elektrische Wechselspannung, die durch den Piezoaktor aufgrund des piezoelektrischen Effektes in eine mechanische Schwingung umgewandelt werden.

Der Piezoaktor ist jedoch kein idealer Wandler, d.h. es entstehen während des Betriebes Verluste, die zu einer Temperaturerhöhung des Piezoaktors führen. Der Piezoaktor verändert seine Eigenschaften in Abhängigkeit von der Temperatur. Dabei ist nur ein Teil der Veränderung auch reversibel. Sobald die Temperatur einen bestimmten Wert überschreitet, kommt es zu irreversiblen Schäden an dem Piezoaktor. Daher ist eine Temperaturmessung im Schwinggebilde grundsätzlich wünschenswert, um eine effiziente Überwachung bereitzustellen und gegebenenfalls auf die Temperatur Einfluss zu nehmen.

Darüber hinaus ist eine Alterungsüberwachung erwünscht. Die Alterung der üblicherweise in Leistungsultraschallanwendungen verwendeten Piezoelementen in dem Piezoaktor ist von hohem Interesse, um die durch Alterung verringerte Wandlung von elektrischer zu mechanischer Schwingung zu kompensieren. Eine fehlende Information zum Alterungszustand verhindert bei aktuellen Abschätzmethoden zur Bestimmung der Amplitude eine gleichbleibend ausreichende Qualität über die Lebensdauer des Systems.

Der vorliegenden Erfindung liegt der Gedanke zugrunde, dass sich eine Kombination mehrerer, unterschiedlicher Sensormaterialien im Konverter explizit in ihrer physikalischen Eigenschaft unterscheidet: piezoelektrisch und pyroelektrisch zu piezoelektrisch und nicht pyroelektrisch für eine Temperaturmessung und monokristallin und polykristallin für eine Lebensdauerüberwachung. Durch den Unterschied in den physikalischen Eigenschaften ergibt sich auch ein Unterschied in der Abhängigkeit von einer intensiven Zustandsgröße, wie z.B. der Temperatur oder dem Alterungszustand.

Die Piezosensoren können darüber hinaus für die Amplitudenmessung der Ultraschallschwingung verwendet werden, auch wenn dies nicht unbedingt notwendig ist.

In den in den Figuren gezeigten Beispielen wird eine kombinierte Alterungs-, Temperatur- und Amplitudenmessung verwirklicht mit zwei piezoelektrischen Sensorelementtypen, von denen das erste Piezosensorelement 4 piezoelektrisch und pyroelektrisch (und gegebenenfalls auch ferroelektrisch) ist und vorzugsweise aus dem gleichen Material besteht wie der Piezoaktor, und das zweite Piezosensorelement 3 lediglich piezoelektrisch, nicht aber pyroelektrisch ist.

Im gezeigten Beispiel besteht das erste Piezosensorelement 4 aus PZT und das zweite Sensorelement 3 aus einem Einkristall, wie z.B. Quarz, der im Vergleich zu einem polykristallinen piezoelektrischen Material, wie z.B. PZT, wesentlich langsamer bzw. gar nicht altert.

Beide Piezosensorelemente werden am besten nahe eines Dehnungsmaximums im Schwinggebilde angeordnet. Dies kann beispielsweise, wie in den Figuren gezeigt, im Konverter nahe des Piezoaktors erfolgen. In Figur 1 ist das erste Piezosensorelement 4 auf einer Fläche mit einer Ground-Elektrode 1 verbunden. Die andere Fläche ist mit einer Messelektrode 7 verbunden, über welche das erste Messsignal abgegriffen werden kann. In gleicher Weise ist das zweite Piezosensorelement 3 auf einer Fläche mit einer Ground-Elektrode 1 und an der anderen Fläche mit einer Messelektrode 8 verbunden. Über die Messelektrode 8 kann das zweite Messsignal abgegriffen werden.

Die beiden Piezosensorelemente 3, 4 sind durch eine Isolationsschicht 5 voneinander getrennt, um die beiden Messelektroden zu trennen.

Das erste Piezosensorelement 4 mit piezoelektrischen und pyroelektrischen Eigenschaften gibt ein erstes Messsignal aufgrund des piezoelektrischen Effektes aus, das im Wesentlichen proportional zur Schwingungsamplitude des Ultraschallschwingers ist. Zusätzlich wird aufgrund des pyroelektrischen Effektes ein weiterer Messsignalanteil ausgegeben, wenn sich das Sensorelement erwärmt.

Das zweite Piezosensorelement 3, welches zwar piezoelektrisch aber nicht pyroelektrisch bzw. nur sehr schwach pyroelektrisch ist, wird nahe dem ersten Sensorelement 4 platziert und gibt ebenfalls ein Messsignal aus, das im Wesentlichen proportional zur Schwingungsamplitude der Ultraschallschwingeinheit ist. Abweichend von dem ersten Piezosensorelement 4 hat hier jedoch eine Temperaturänderung keinen signifikanten Einfluss auf das zweite Messsignal, sodass allein ein Messsignal proportional zur Schwingungsamplitude des Ultraschallschwingers ausgegeben wird.

Grundsätzlich ist es auch möglich, das Isolationselement 5 wegzulassen. Wird ansonsten am Aufbau nichts geändert, dann liegen die beiden Messsignale an dergleichen Elektrode an. Wenn beide Sensorelemente mit der gleichen Polarisation angeordnet werden, subtrahieren sich dann die beiden Messsensorsignale, sodass die Komponente, die proportional zur Schwingungsamplitude ist, nahezu eliminiert wird. Im Ergebnis wird lediglich ein Messsignal erhalten, was eine Abhängigkeit von der Temperatur zeigt. Gegebenenfalls ist zunächst eine Skalierung der geometrischen Abmessungen beider Sensoren notwendig, sodass die Signalanteile, die durch die mechanische Schwingung hervorgerufen werden, bei beiden Sensoren für gleiche Schwingungen auch gleich groß sind.

Das zweite Piezosensorelement 3 besteht in dem beschriebenen Beispiel aus einem Einkristall, z.B. aus Quarz, sodass in diesem Piezosensorelement die Alterung wesentlich langsamer fortschreitet als beim ersten Piezosensorelement 4 oder bei dem Piezoaktor. Somit kann eine durch den Vergleich der hochfrequenten Messsignale zwischen den beiden Sensoren oder zwischen dem zweiten Piezosensorelement 3 und dem Piezoaktor eine Abschätzung über die Alterung, bzw. der Veränderung der piezoelektrischen Konstante, hier vor allem der d33-Konstante, getroffen und gegebenenfalls mithilfe der Regelung über den Generator kompensiert werden.

Es ist auch möglich, wie in Figur 2 gezeigt ist, auf das Isolationselement zu verzichten und dennoch zwei Messsignale getrennt voneinander zu erfassen. In dieser Ausführungsform weisen sowohl erstes als auch zweites Piezosensorelement 3,4 jeweils zwei Piezoscheiben auf, die an ihren voneinander abgewandten Flächen mit einer Ground-Elektrode 1 verbunden sind und an ihren einander zugewandten inneren Flächen mit einer Messelektrode 7,8 verbunden sind, über welche die Messsignale abgegriffen werden können.

### Bezugszeichenliste

- 1: Ground-Elektrode
- 2: Piezoaktor
- 3: zweites Piezosensorelement
- 4: erstes Piezosensorelement
- 5: Isolationselement
- 6: (+)-Elektrode
- 7, 8: Messelektrode
- 9: Halteflansch
- 10, 10`: Konverter
- 11: Gewindestange
- 12: Befestigungsmutter
- 13, 14: Grundkörperelement

## Patentansprüche

1. Ultraschallschwingeinrichtung mit einer Sonotrode und einem Konverter (10, 10'), wobei der Konverter (10, 10') einen Piezoaktor (2) zur Umwandlung einer elektrischen Wechselspannung in eine mechanische Schwingung aufweist, wobei ein erstes Piezosensorelement (4) vorgesehen ist, welches ein erstes Messsignal ausgibt, welches in Abhängigkeit von der Schwingungsamplitude der mechanischen Schwingung variiert, und wobei ein zweites Piezosensorelement (3) vorgesehen ist, welches ein zweites Messsignal ausgibt, welches in Abhängigkeit von der Schwingungsamplitude der mechanischen Schwingung variiert, **dadurch gekennzeichnet, dass** sich das zweite Piezosensorelement (3) derart in einer physikalischen Eigenschaft von dem ersten Piezosensorelement (4) unterscheidet, sodass das erste und das zweite Messsignal eine unterschiedliche Abhängigkeit von einer intensiven Zustandsgröße zeigen.

2. Ultraschallschwingeinrichtung nach Anspruch 1, **dadurch gekennzeichnet, dass** eine Vergleichseinrichtung vorgesehen ist, welche das erste Messsignal mit dem zweiten Messsignal vergleicht.

3. Ultraschallschwingeinrichtung nach Anspruch 1 oder 2, **dadurch gekennzeichnet, dass** das erste Piezosensorelement (4) und das zweite Piezosensorelement (3) unterschiedliche pyroelektrische Eigenschaften aufweisen.

4. Ultraschallschwingeinrichtung nach einem der Ansprüche 1-3, **dadurch gekennzeichnet, dass** das erste Piezosensorelement (4) und das zweite Piezosensorelement (3) Kristalle mit unterschiedlichen Kristallitgrößen aufweisen.

5. Ultraschallschwingeinrichtung nach Anspruch 4, **dadurch gekennzeichnet, dass** eines der beiden Piezosensorelemente einen piezoelektrischen Monokristall und das andere Piezosensorelement einen piezoelektrischen Polykristall aufweist.

6. Ultraschallschwingeinrichtung nach einem der Ansprüche 1-5, **dadurch gekennzeichnet, dass** zumindest ein Piezosensorelement und vorzugsweise beide Piezosensorelemente im Konverter (10, 10') angeordnet sind.

7. Ultraschallschwingeinrichtung nach Anspruch 6, **dadurch gekennzeichnet, dass** der Piezoaktor (2) und die beiden Piezosensorelemente nebeneinander angeordnet sind, wobei vorzugsweise die beiden Piezosensorelemente in der Longitudinalrichtung nebeneinander angeordnet sind.

8. Ultraschallschwingeinrichtung nach einem der Ansprüche 1-7, **dadurch gekennzeichnet, dass** der Piezoaktor (2) und das erste Piezosensorelement (4) aus dem gleichen piezoelektrischen Material bestehen.

9. Ultraschallschwingeinrichtung nach einem der Ansprüche 1-8, **dadurch gekennzeichnet, dass** der Piezoaktor (2) in Longitudinalrichtung eine größere Ausdehnung hat als das zweite Piezosensorelement(3).

10. Verfahren zum Messen einer Änderung einer intensiven Zustandsgröße eines Piezoaktors eines Ultraschallschwingsystems nach einem der Ansprüche 1-9, **dadurch gekennzeichnet, dass** die Differenz des mit einem ersten Wichtungsfaktor multiplizierten ersten Messsignals und des mit einem zweiten Wichtungsfaktor multiplizierten zweiten Messsignales gebildet wird und die Differenz als Maß für die Veränderung der intensiven Zustandsgröße verwendet wird.

## Claims

1. An ultrasonic vibration device having a sonotrode and a converter (10, 10'), wherein the converter (10, 10') has a piezoelectric actuator (2) for converting an electrical alternating voltage into a mechanical vibration, wherein there is provided a first piezoelectric sensor element (4) which outputs a first measurement signal which varies in dependence on the vibration amplitude of the mechanical vibration, and wherein there is provided a second piezoelectric sensor element (3) which outputs a second measurement signal which varies in dependence on the vibration amplitude of the mechanical vibration, **characterised in that** the second piezoelectric sensor element (3) differs in a physical property from the first piezoelectric sensor element (4), such that the first and the second measurement signal show a different dependency on an intensive state variable.

2. The ultrasonic vibration device according to claim 1 **characterised in that** there is provided a comparison device which compares the first measurement signal to the second measurement signal.

3. The ultrasonic vibration device according to claim 1 or claim 2 **characterised in that** the first piezoelectric sensor element (4) and the second piezoelectric sensor element (3) have different pyroelectric properties.

4. The ultrasonic vibration device according to one of claims 1 to 3 **characterised in that** the first piezoelectric sensor element (4) and the second piezoelectric sensor element (3) have crystals with different crystallite sizes.

5. The ultrasonic vibration device according to claim 4 **characterised in that** one of the two piezoelectric sensor elements has a piezoelectric monocrystal and the other piezoelectric sensor element has a piezoelectric polycrystal.

6. The ultrasonic vibration device according to one of claims 1 to 5 **characterised in that** at least one piezoelectric sensor element and preferably both piezoelectric sensor elements are arranged in the converter (10, 10').

7. The ultrasonic vibration device according to claim 6 **characterised in that** the piezoelectric actuator (2) and the two piezoelectric sensor elements are arranged in mutually juxtaposed relationship, wherein preferably the two piezoelectric sensor elements are arranged in mutually juxtaposed relationship in the longitudinal direction.

8. The ultrasonic vibration device according to one of claims 1 to 7 **characterised in that** the piezoelectric actuator (2) and the first piezoelectric sensor element (4) comprise the same piezoelectric material.

9. The ultrasonic vibration device according to one of claims 1 to 8 **characterised in that** the piezoelectric actuator (2) is of a greater extent in the longitudinal direction than the second piezoelectric sensor element (3).

10. A method of measuring a change in an intensive state variable of an element of an ultrasonic vibration system according to one of claims 1 to 9 **characterised in that** the difference of the first measurement signal multiplied by a first weighting factor and the second measurement signal multiplied by a second weighting factor is formed and the difference is used as a measure in respect of the variation in the intensive state variable.

## Revendications

1. Dispositif oscillant ultrasonore comprenant une sonotrode et un convertisseur (10, 10'), le convertisseur (10, 10') comprenant un actionneur piézoélectrique (2) permettant de convertir une tension alternative électrique en une oscillation mécanique, un premier élément de capteur piézoélectrique (4) qui émet un premier signal de mesure variant en fonction de l'amplitude d'oscillation de l'oscillation mécanique étant fourni, et un second élément de capteur piézoélectrique (3) qui émet un second signal de mesure variant en fonction de l'amplitude d'oscillation de l'oscillation mécanique étant fourni, **caractérisé en ce que** le second élément de capteur piézoélectrique (3) diffère du premier élément de capteur piézoélectrique (4) par une propriété physique, de sorte que les premier et second signaux de mesure présentent une dépendance différente envers une variable d'état intensive.

2. Dispositif oscillant ultrasonore selon la revendication 1, **caractérisé en ce qu'**un dispositif de comparaison qui compare le premier signal de mesure au second signal de mesure est fourni.

3. Dispositif oscillant ultrasonore selon la revendication 1 ou 2, **caractérisé en ce que** le premier élément de capteur piézoélectrique (4) et le second élément de capteur piézoélectrique (3) ont des propriétés pyroélectriques différentes.

4. Dispositif oscillant ultrasonore selon l'une quelconque des revendications 1 à 3, **caractérisé en ce que** le premier élément de capteur piézoélectrique (4) et le second élément de capteur piézoélectrique (3) comprennent des cristaux ayant différentes tailles de cristallite.

5. Dispositif oscillant ultrasonore selon la revendication 4, **caractérisé en ce qu'**un des deux éléments de capteur piézoélectrique comprend un monocristal piézoélectrique et l'autre élément de capteur piézoélectrique comprend un polycristal piézoélectrique.

6. Dispositif oscillant ultrasonore selon l'une quelconque des revendications 1 à 5, **caractérisé en ce qu'**au moins un élément de capteur piézoélectrique et de manière préférée les deux éléments de capteur piézoélectrique est/sont agencé(s) dans le convertisseur (10, 10').

7. Dispositif oscillant ultrasonore selon la revendication 6, **caractérisé en ce que** l'actionneur piézoélectrique (2) et les deux éléments piézoélectriques sont agencés côte à côte, les deux éléments piézoélectriques étant de manière préférée agencés côte à côte dans la direction longitudinale.

8. Dispositif oscillant ultrasonore selon l'une quelconque des revendications 1 à 7, **caractérisé en ce que** l'actionneur piézoélectrique (2) et le premier élément de capteur piézoélectrique (4) sont constitués du même matériau piézoélectrique.

9. Dispositif oscillant ultrasonore selon l'une quelconque des revendications 1 à 8, **caractérisé en ce que** l'actionneur piézoélectrique (2) présente dans le sens longitudinal une étendue supérieure à celle du second élément de capteur piézoélectrique (3).

10. Procédé de mesure d'une modification d'une variable d'état intensive d'un actionneur piézoélectrique d'un système oscillant ultrasonore selon l'une quelconque des revendications 1 à 9, **caractérisé en ce qu'**une différence entre le premier signal de mesure multiplié par un premier facteur de pondération et le second signal de mesure multiplié par un second facteur de pondération est constituée et la différence est utilisée comme mesure pour la modification de variable d'état intensive.
